(19) Europäisches Patentamt
European Patent Office
Office européen des brevets

(11) EP 2 689 671 B1

(12) EUROPEAN PATENT SPECIFICATION

(45) Date of publication and mention
of the grant of the patent:
**29.06.2016 Bulletin 2016/26**

(51) Int Cl.:
*A23L 29/00* [(2016.01)]       *A23L 11/00* [(2016.01)]
*A23L 2/52* [(2006.01)]

(21) Application number: **12760129.2**

(22) Date of filing: **21.02.2012**

(86) International application number:
**PCT/JP2012/054044**

(87) International publication number:
**WO 2012/127961 (27.09.2012 Gazette 2012/39)**

(54) **DEFOAMING AGENT FOR FOOD**

ENTSCHÄUMUNGSMITTEL FÜR LEBENSMITTEL

ANTIMOUSSANT POUR ALIMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2011 JP 2011064916
21.09.2011 JP 2011205630**

(43) Date of publication of application:
**29.01.2014 Bulletin 2014/05**

(73) Proprietor: **RIKEN VITAMIN CO., LTD.
Chiyoda-ku,
Tokyo 101-8370 (JP)**

(72) Inventor: **ABE, Takanori
Hirakata-shi
Osaka 573-0065 (JP)**

(74) Representative: **Teipel, Stephan et al
Lederer & Keller
Patentanwälte Partnerschaft mbB
Unsöldstrasse 2
80538 München (DE)**

(56) References cited:
**EP-A1- 0 450 605        WO-A2-02/36534
DE-A1- 10 233 701        JP-A- S56 164 750
JP-A- S61 247 345        JP-A- 2000 290 682
JP-A- 2005 278 406        JP-A- 2007 203 214
JP-A- 2010 193 740        US-A- 4 609 490**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a defoaming agent for food.

BACKGROUND ART

In food production processes, foam formation (foaming) can pose problems by decreasing production capacity and causing defects in quality. For example, in the production of a ham or sausage product, due to proteins in the pickling liquid (brine), foams tend to be formed in the pickling process and can deteriorate the quality of the ham or sausage as a final product. Also, in the production of beet sugar, foaming in the Steffen process, where quicklime is added to enzyme-treated molasses and then sugar as calcium sucrate is recovered, can cause production line troubles etc., leading to decrease in production efficiency.

To solve these problems, silicone resin based defoaming agents, glycerol fatty acid ester based defoaming agents, fat-or-oil based defoaming agents, etc. have been conventionally used. However, silicone resin based defoaming agents are sometimes unusable for the following reasons: they are deemed as unfavorable in terms of safety; the usage of them as a food additive is restricted, and the allowable amount is not enough to exert a sufficient defoaming effect.

Regarding the glycerol fatty acid ester based defoaming agents and the fat-or-oil based defoaming agents, known examples include a defoaming agent for food, consisting of one kind of diglyceride having short-chain (6 to 12 carbon atoms) fatty acids or a mixture of two or more kinds thereof (Patent Literature 1), a defoaming agent for food comprising, as essential components, one or more kinds of diglycerides having constituent fatty acids having 14 to 24 carbon atoms and a sucrose fatty acid ester and/or a polyglycerol fatty acid ester (Patent Literature 2), a liquid material for a carbonated beverage, comprising aspartame as a sweetener and an emulsifier having an HLB value of 1 to 14 and/or an emulsifier having a molecular weight of 50 to 300 (Patent Literature 3), a defoaming agent composition containing 100 parts by mass of (A) a glycerol fatty acid ester in which the total of caprylic acid residues and oleic acid residues is 50 mol% or more relative to the total of fatty acid residues and 10 to 900 parts by mass of (B) a propylene glycol fatty acid ester in which the total of caprylic acid residues and oleic acid residues is 60 mol% or more relative to the total of fatty acid residues (Patent Literature 4), a foam suppressor comprising monoglyceride citrate and a polyglycerol fatty acid ester having an HLB value of 10 to 16 (Patent Literature 5), and a defoaming agent for food comprising 12 to 15 % by weight of polyglycerol unsaturated fatty acid ester, 8 to 12 % by weight of glycerol unsaturated fatty acid ester, 4 to 8 % by weight of glycerol saturated fatty acid ester, and 65 to 76 % by weight of sugar (Patent Literature 6).

JP S61 247345 discloses a defoaming agent containing (A) one or more kinds of 6 - 12 C saturated fatty acid triglycerides such as fractionated coconut oil or a triglyceride of mixed fatty acid comprising caprylic acid and capric acid and (B) one or more kinds of alcohols selected from ethanol and propylene glycol as active components.

However, the above defoaming agents, which may exert a defoaming effect equal to or higher than that of silicone resin based defoaming agents, do not necessarily have sufficient effects, such as a defoaming effect at low temperature, for example 0 to 20°C.

CITATION LIST

[Patent Literature]

[PTL 1] JP 56-164750 A
[PTL 2] JP 06-245718 A
[PTL 3] WO 2003/096825
[PTL 4] JP 2007-203214 A
[PTL 5] JP 2008-119588 A
[PTL 6] JP 2010-193740 A

SUMMARY OF INVENTION

TECHNICAL PROBLEM

An objective of the present invention is to provide a defoaming agent for food having a defoaming effect equal to or higher than that of silicone resin based defoaming agents.

SOLUTION TO PROBLEM

The present inventor conducted extensive research to achieve the above-mentioned objective. As a result, the inventor found that an esterification product of diglycerol with caprylic acid and/or capric acid having a specific composition has a defoaming effect equal to or higher than that of silicone resin based defoaming agents and that the effect is sufficiently higher than that of silicone resin based defoaming agents in particular at low temperature of 0 to 20°C, and thus completed the present invention based on these facts.

That is, the present invention comprises the following (1).

(1) A defoaming agent which is an esterification product of (i) diglycerol and (ii) caprylic acid and/or capric acid and is characterized by satisfying the following formulae (1) and (2) :

$$\text{Formula (1): } 0.8 \leq (A+B+C)/(A+B+C+D)$$

$$\text{Formula (2): } 0.5 \leq (B+C)/A \leq 10$$

when the monoester content in the product is represented by A%, the diester content in the product is represented by B%, the triester content in the product is represented by C%, and the tetraester content in the product is represented by D%.

ADVANTAGEOUS EFFECTS OF INVENTION

The defoaming agent of the present invention for food has a defoaming effect equal to or higher than that of silicone resin based defoaming agents, and therefore can preferably be used as a substitute for silicone resin based defoaming agents, especially in food production in which defoaming at low temperature of 0 to 20°C is required.

DESCRIPTION OF EMBODIMENTS

The defoaming agent of the present invention for food is an esterification product of diglycerol with caprylic acid (hereinafter also referred to as "diglycerol caprylic acid ester mixture"), an esterification product of diglycerol with capric acid (hereinafter also referred to as "diglycerol capric acid ester mixture"), or an esterification product of diglycerol with a mixture of caprylic acid and capric acid (hereinafter also referred to as "a diglycerol caprylic acid capric acid ester mixture"), and is characterized by satisfying the following formulae (1) and (2) when the monoester content in the product is represented by A%, the diester content in the product is represented by B%, the triester content in the product is represented by C%, and the tetraester content in the product is represented by D%.

$$\text{Formula (1): } 0.8 \leq (A+B+C)/(A+B+C+D)$$

$$\text{Formula (2): } 0.5 \leq (B+C)/A \leq 10$$

Hereinafter, each of the above formulae will be described in detail.

Among the above monoester, diester, triester, and tetraester, the defoaming effect of the tetraester is extremely weak, and the substantial defoaming effect is possessed by the monoester, the diester, and the triester. Therefore, the defoaming agent of the present invention for food preferably has a high content of the monoester, the diester, and the triester in the total of the monoester, the diester, the triester, and the tetraester. For the reason, the defoaming agent of the present invention for food is prepared so that the monoester content (A%), the diester content (B%), the triester content (C%), and the tetraester content (D%) satisfy the following formula (1):

$$\text{Formula (1): } 0.8 \text{ (preferably } 0.84, \text{ more preferably } 0.9) \leq$$

$$(A+B+C)/(A+B+C+D).$$

Further, the defoaming agent of the present invention for food preferably contains a large amount of the diester and the triester because the defoaming effects of the diester and the triester are higher than that of the monoester. However, the dispersibility of the diester and the triester in water is lower than that of the monoester, and thus if the content of the diester and the triester is extremely high, the defoaming effect of the mixture as a whole is insufficient due to decreased dispersibility in water. Meanwhile, the defoaming effect of the monoester is lower than those of the diester and the triester, but the dispersibility in water of the monoester is relatively high. As a result, when a certain amount of the monoester is contained, the mixture as a whole exerts a sufficient defoaming effect. Therefore, the defoaming agent for food is prepared so that the monoester content (A%), the diester content (B%), and the triester content (C%) satisfy the following formula (2) : Formula (2): $0.5$ (preferably $0.6$) $\leq (B+C)/A \leq 10$ (preferably $9.5$).

The process for producing the defoaming agent of the present invention for food is not particularly limited and can be a method known per se, in general esterification of diglycerol with caprylic acid and/or capric acid.

The diglycerol used as a raw material of the defoaming agent of the present invention for food may be, for example, a diglycerol mixture which is obtainable by polycondensation of glycerol in the presence of a small amount of an acid or an alkali as a catalyst with heating, for example at a temperature of about 180°C or higher under any inert gas (such as nitrogen or carbon dioxide) atmosphere and which has an average polymerization degree of about 1.5 to 2.4, preferably about 2.0. Also, the diglycerol may be one obtainable with the use of glycidol, epichlorohydrin, or the like as a raw material. After the end of the reaction, treatments, such as neutralization, desalination, and decolorization may be performed as needed.

In the present invention, preferably used is a highly pure diglycerol which is obtainable by purifying the above diglycerol mixture by a method known per se, for example by distillation or column chromatography and which contains about 50% by mass or more, preferably about 85% by mass or more of diglycerol consisting of two glycerol molecules relative to the total amount of the diglycerol mixture.

The caprylic acid and/or the capric acid used as a raw material of the defoaming agent of the present invention for food is not particularly limited as long as it is derived from edible animal or vegetable fats or oils, but preferred are those having a purity of 50% or higher. A purity of lower than 50% is not preferred because such a low purity may hinder the defoaming effect of the present invention from being sufficiently exerted.

The outline of the esterification process for producing the defoaming agent of the present invention is as follows. For example, diglycerol and caprylic acid and/or the capric acid at the molar ratio of $1.0{:}0.7$ to $1.0{:}2.5$ are placed into an ordinary reaction container equipped with a stirrer, a heating jacket, a baffle plate, etc. To this, sodium hydroxide is usually added as a catalyst, and the mixture is stirred and heated at a predetermined temperature under nitrogen atmosphere while water generated by the esterification is continuously removed from the system. The reaction temperature is typically about 180 to 260°C, preferably about 200 to 250°C. The reaction is performed under ordinary pressure or reduced pressure for about 0.5 to 15 hours, preferably about 1 to 3 hours. The acid value of the reaction mixture is usually measured for determining the end point of the reaction, which is indicated by the acid value of about 3 or lower. The obtained reaction mixture contains unreacted caprylic acid, unreacted capric acid, unreacted diglycerol, diglycerol monocaprylic acid ester, diglycerol monocapric acid ester, diglycerol dicaprylic acid ester, diglycerol dicapric acid ester, diglycerol tricaprylic acid ester, diglycerol tricapric acid ester, diglycerol tetracaprylic acid ester, diglycerol tetracapric acid ester, etc.

After the end of the esterification, the catalyst remaining in the reaction mixture may be neutralized as needed. In that case, if the temperature of the esterification is 200°C or higher, it is preferred that the temperature of the reaction mixture is lowered to about 180 to 200°C before the neutralization. If the reaction temperature is 200°C or lower, neutralization may be performed at the temperature. For example, when sodium hydroxide used as a catalyst is neutralized with the use of phosphoric acid (85% by mass), the amount of phosphoric acid (85% by mass) to be used is not less than the amount* obtained by dividing the phosphoric acid amount calculated from the neutralization equation (1) shown below by 0.85, and preferably twice to three times the amount* obtained by dividing the phosphoric acid amount calculated from the neutralization equation (1) shown below by 0.85. Such an amount of phosphoric acid is added to the reaction mixture and mixed well to achieve neutralization of the catalyst. After neutralization, the reaction mixture is left stand at the temperature preferably for about 0.5 hour or longer, more preferably for about 1 to 10 hours. In the cases where unreacted diglycerol separates into a lower layer, it should be removed. *: About 0.96 g relative to 1.0 g of sodium hydroxide. Neutralization Equation

$$3NaOH + H_3PO_4 \rightarrow Na_3PO_4 + 3H_2O \cdots \qquad (1)$$

The mixture obtained as a result of the above treatment may be subjected to treatments, such as desalination, decolorization, and filtration as needed. Eventually, a diglycerol caprylic acid ester mixture of which the monoester content (A%), the diester content (B%), the triester content (C%), and the tetraester content (D%) satisfy the following formulae (1) and (2) is obtained.

$$\text{Formula (1):} \quad 0.8 \leq (A+B+C)/(A+B+C+D)$$

$$\text{Formula (2):} \quad 0.5 \leq (B+C)/A \leq 10$$

The defoaming agent of the present invention for food can also be produced by appropriately re-blending a diglycerol caprylic acid ester mixture, a diglycerol capric acid ester mixture, or a diglycerol caprylic acid capric acid ester mixture which are produced by a method other than the method described above, or a diglycerol caprylic acid ester mixture, a diglycerol capric acid ester mixture, or a diglycerol caprylic acid capric acid ester mixture which are commercially available so as to satisfy the above formulae (1) and (2).

Specifically, the defoaming agent of the present invention for food can be produced by, for example, extracting, with the use of an organic solvent, such as hexane or methanol, desired components from a diglycerol caprylic acid ester mixture, a diglycerol capric acid ester mixture, or a diglycerol caprylic acid capric acid ester mixture which are produced by a method other than the method described above, or a diglycerol caprylic acid ester mixture, a diglycerol capric acid ester mixture, or a diglycerol caprylic acid capric acid ester mixture which are commercially available, and subsequently concentrating the desired components in the organic solvent phase and optionally re-blending the obtained concentrates at a desired ratio.

Alternatively, the defoaming agent of the present invention for food can be produced by, for example, fractionating a diglycerol caprylic acid ester mixture, a diglycerol capric acid ester mixture, or a diglycerol caprylic acid capric acid ester mixture with the use of a silica gel column and an organic solvent, such as chloroform or methanol as a developing solvent and optionally re-blending the obtained fractions at a desired ratio.

The monoester content (A%), the diester content (B%), the triester content (C%), and the tetraester content (D%) in the defoaming agent of the present invention for food can be determined by high-performance liquid chromatography (HPLC). Specifically, after the sample is analyzed in the conditions shown below, a chromatogram showing peaks corresponding to each component of the test sample was obtained via a kind of data processing software. Then, peak area measurement for objective peaks is performed with use of an integrator. Based on the measured peak areas, the content of each component can be calculated as an area percentage.

The HPLC analysis conditions are shown below.

HPLC analysis conditions

Device: High-performance liquid chromatograph made by Shimadzu Corp.
Data processing software (Model: LC solution ver. 1.0; made by Shimadzu Corp.)
Pump (Model: LC-20AD; made by Shimadzu Corp.)
Column oven (Model: CTO-20A; made by Shimadzu Corp.)
Autosampler (Model: SIL-20A; made by Shimadzu Corp.)
Detector: RI detector (Model: RID-10A; made by Shimadzu Corp.)
Columns: GPC column (Model: SHODEX KF-801; made by Showa Denko K.K.) and GPC column (Model: SHODEX KF-802; made by Showa Denko K.K.) connected to each other
Mobile phase: THF (tetrahydrofuran)
Flow rate: 1.0 mL/min
Column temperature: 40°C
Sample concentration: 0.01 g/1 mL THF
Sample injection volume: 20 $\mu$L (in THF)

The object and the method of the use of the defoaming agent of the present invention for food are not particularly limited, and the defoaming agent can be used for breakdown of existing foams or prevention of foam formation in a process for producing a food product, prevention of foam formation during delivery or sales of a food product, etc. Examples of the use include a use in the production of tofu, deep-fried tofu, freeze-dried tofu, soymilk drink, etc. involving a process of obtaining soymilk by steaming "Go" (ground soybean), a use in the production of a dairy product, an antibiotic, yeast, etc. involving a fermentation process in a fermentation tank, and a use in the production of a beverage or sugar. Since the defoaming agent of the present invention for food has a particularly excellent defoaming effect at low temperature of 0 to 20°C, the defoaming agent is more preferably used in the pickling liquid preparation process and the pickling process in the production of a ham or sausage product, the packaging process in the production of a packaged product, the Steffen process in the production of beet sugar, prevention of foam formation during the delivery of a packaged liquid food product, prevention of excessive foam formation of a beverage at the time when a paper cup is filled with the beverage in a vending machine, etc. , all of which are processes requiring breakdown of existing foams or prevention of foam formation at low temperature.

In the cases where the defoaming agent of the present invention for food is used in the pickling liquid preparation process and the pickling process in the production of a ham or sausage product, addition of the defoaming agent may be performed during or after the preparation of the pickling liquid. The amount of the deforming agent to be added is not particularly limited, and may be, for example, 10 to 500 ppm relative to the total amount of the pickling liquid. This addition enables prevention of foam formation or breakdown of generated foams in the pickling liquid preparation process and control of foam formation in the following pickling process, and as a result, prevention of deterioration in the quality of the ham or sausage as a final product.

In the cases where the defoaming agent of the present invention for food is used in the production of a packaged highly fluid food product (for example, a beverage in a carton), the defoaming agent may be added to the food before the packaging process. The amount of the deforming agent to be used is not particularly limited, and may be, for example, 10 to 500 ppm relative to the total amount of the food. This addition enables prevention of decrease in production efficiency caused by foam formation etc. in the packaging process.

Also, in the cases where the defoaming agent of the present invention for food is used in the production of beet sugar, the defoaming agent may be used in the process where quicklime is added to enzyme-treated molasses and sugar as calcium sucrate is recovered (so-called Steffen process). More specific example of the method for using the deforming agent include a method where 10 to 500 ppm of the deforming agent relative to the amount of the liquid to be treated (molasses) is supplied to the continuous production line with the use of a tubing pump etc. at the same time as and/or immediately (for example, within 10 minutes) after the addition of quicklime. This supply enables prevention of decrease in production efficiency resulting from line troubles etc. caused by foam formation in the Steffen process.

The defoaming agent of the present invention for food may be used in combination with another deforming agent depending on the intended use, and also may be used after formulated together with food materials or food additives, such as water, an alcohol, a sugar, a salt, a starch, a dextrin, a polysaccharide thickener, a fat or oil, an emulsifier, etc. as needed.

In the cases where the defoaming agent of the present invention for food is formulated, the form of the formulation is not particularly limited. Examples of the form include an oil formulation obtainable by melt mixing of the deforming agent with a fat or oil, an emulsifier, an alcohol, etc.; a powder formulation obtainable by adsorbing the deforming agent to a powder base materials, such as a starch and a dextrin; and an oil-in-water emulsion formulation obtainable by dispersing the deforming agent in a polar dispersion medium, such as water, ethanol, and liquid sugar, etc.

The method for producing the oil-in-water emulsion formulation is not particularly limited. A preferred example of the method will be outlined below.

That is, to a polar dispersion medium, such as water, ethanol, and liquid sugar, a hydrophilic emulsifier (for example, a polyglycerol fatty acid ester having an HLB value of 10 or higher) is added, and the mixture is subjected to mixing at a low speed (for example, 2000 to 5000 rpm) with the use of a high-speed emulsifying/dispersing mixer, such as T.K. homo mixer (Model: MARK II; made by PRIMIX Corp.) until the emulsifier is uniformly dispersed. Subsequently, the defoaming agent of the present invention for food is gradually added to the dispersion with mixing at the same speed, and then further mixed/dispersed with the same high-speed emulsifying/dispersing mixer at a high speed (for example, 7000 to 12000 rpm) to give an oil-in-water emulsion composition. The oil-in-water emulsion composition is preferably prepared so as to contain 0.1 to 2.0% by mass of a hydrophilic emulsifier, 5 to 50% by mass of the defoaming agent of the present invention for food, and a polar dispersion medium as the remainder. In the preparation of the oil-in-water emulsion composition, instead of the defoaming agent of the present invention for food, a mixture of the deforming agent and a fat, an oil, or a lipophilic emulsifier (for example, a glycerol acetic acid fatty acid ester having an HLB value of 3 or lower) may be used.

Hereinafter, the present invention will be illustrated in detail by way of examples, but is not limited thereto.

EXAMPLES

Production Example 1

First, into a reaction vessel equipped with a stirrer, a thermometer, a gas blowing pipe, and a water separator, 20 kg of glycerol was placed. To this, 100 mL of a 20 w/v% sodium hydroxide aqueous solution was added as a catalyst, and the mixture was kept at 250°C for 4 hours in nitrogen gas flow for glycerol condensation. After the obtained reaction product was cooled to about 90°C, neutralization with about 20 g of phosphoric acid and subsequent filtration were performed. The filtrate was distilled under reduced pressure of 250 Pa at 160°C for removal of glycerol. Subsequently, vacuum distillation was performed under high vacuum of 20 Pa at 200°C to give about 3.0 kg of a fraction (diglycerol mixture) containing 3% of glycerol, 92% of diglycerol, and 5% of triglycerol. To the fraction, 1% by mass of activated carbon was added under reduced pressure for decolorization of the mixture, and then filtered out. The hydroxyl value of the obtained diglycerol was about 1359, the average polymerization degree was about 2.0, and the purity was 98%.

Next, into a 500 mL-four-neck flask equipped with a stirrer, a thermometer, a gas blowing pipe, and a water separator, 176.6 g (about 1.06 mol) of the diglycerol mixture obtained as above and 123.4 g (about 0.86 mol) of caprylic acid (trade name: NAA-82; made by NOF Corp.) were placed. To this, 1.5 mL of a 10 w/v% sodium hydroxide aqueous solution was added as a catalyst, and the mixture was kept at 200°C in nitrogen gas flow under ordinary pressure for 1 hour for esterification. Further, the temperature was raised to 230°C, and the esterification was continued for about 2 hours until the acid value was reduced to 1.0 or lower. The obtained reaction mixture was cooled, and thus about 270 g of a defoaming agent for food (Trial Product 1) was obtained.

Production Example 2

Into a 500-mL four-neck flask equipped with a stirrer, a thermometer, a gas blowing pipe, and a water separator, 148.5 g (about 0.89 mol) of the diglycerol obtained in the above Production Example 1 and 151.5 g (about 1.05 mol) of caprylic acid (trade name: NAA-82; made by NOF Corp.) were placed. To this, 1.5 mL of a 10 w/v% sodium hydroxide aqueous solution was added as a catalyst, and the mixture was kept at 200°C in nitrogen gas flow under ordinary pressure for 1 hour for esterification. Further, the temperature was raised to 230°C, and the esterification was continued for about 2 hours until the acid value was reduced to 1.0 or lower. The obtained reaction mixture was cooled, and thus about 270 g of a defoaming agent for food (Trial Product 2) was obtained.

Production Example 3

Into a 500-mL four-neck flask equipped with a stirrer, a thermometer, a gas blowing pipe, and a water separator, 125.1 g (about 0.75 mol) of the diglycerol obtained in the above Production Example 1 and 174.9 g (about 1.21 mol) of caprylic acid (trade name: NAA-82; made by NOF Corp.) were placed. To this, 1.5 mL of a 10 w/v% sodium hydroxide aqueous solution was added as a catalyst, and the mixture was kept at 200°C in nitrogen gas flow under ordinary pressure for 1 hour for esterification. Further, the temperature was raised to 230°C, and the esterification was continued for about 2.5 hours until the acid value was reduced to 1.0 or lower. The obtained reaction mixture was cooled, and thus about 270 g of a defoaming agent for food (Trial Product 3) was obtained.

Production Example 4

Into a 500-mL four-neck flask equipped with a stirrer, a thermometer, a gas blowing pipe, and a water separator, 109.2 g (about 0.66 mol) of the diglycerol obtained in the above Production Example 1 and 190.8 g (about 1.33 mol) of caprylic acid (trade name: NAA-82; made by NOF Corp.) were placed. To this, 1.5 mL of a 10 w/v% sodium hydroxide aqueous solution was added as a catalyst, and the mixture was kept at 200°C in nitrogen gas flow under ordinary pressure for 1 hour for esterification. Further, the temperature was raised to 230°C, and the esterification was continued for about 3 hours until the acid value was reduced to 1.0 or lower. The obtained reaction mixture was cooled, and thus about 270 g of a defoaming agent for food (Trial Product 4) was obtained.

Production Example 5

Into a 500-mL four-neck flask equipped with a stirrer, a thermometer, a gas blowing pipe, and a water separator, 96.9 g (about 0.58 mol) of the diglycerol obtained in the above Production Example 1 and 203.1 g (about 1.41 mol) of caprylic acid (trade name: NAA-82; made by NOF Corp.) were placed. To this, 1.5 mL of a 10 w/v% sodium hydroxide aqueous solution was added as a catalyst, and the mixture was kept at 200°C in nitrogen gas flow under ordinary pressure for 1 hour for esterification. Further, the temperature was raised to 230°C, and the esterification was continued for about 3 hours until the acid value was reduced to 1.0 or lower. The obtained reaction mixture was cooled, and thus about 260 g of a defoaming agent for food (Trial Product 5) was obtained.

Production Example 6

An amount of 50 g of Trial Product 4 obtained in Production Example 4 was weighed out and dissolved in 250 mL of hexane. To this, 200 mL of 10 v/v% aqueous methanol was added and solvent extraction was performed. The solvent of the obtained aqueous methanol phase was distilled away using an evaporator, and thus about 30 g of a defoaming agent for food (Trial Product 6) was obtained.

Production Example 7

An amount of 50 g of Trial Product 5 obtained in Production Example 5 was weighed out and dissolved in 150 mL of hexane. To this, 100 mL of 10 v/v% aqueous methanol was added and solvent extraction was performed. The solvent of the obtained aqueous methanol phase was distilled away using an evaporator, and thus about 10 g of a defoaming agent for food (Trial Product 7) was obtained.

Production Example 8

Into a 500-mL four-neck flask equipped with a stirrer, a thermometer, a gas blowing pipe, and a water separator, 87.1 g (about 0.52 mol) of the diglycerol obtained in the above Production Example 1 and 212.9 g (about 1.48 mol) of caprylic acid (trade name: NAA-82; made by NOF Corp.) were placed. To this, 1.5 mL of a 10 w/v% sodium hydroxide aqueous solution was added as a catalyst, and the mixture was kept at 200°C in nitrogen gas flow under ordinary pressure for 1 hour for esterification. Further, the temperature was raised to 230°C, the esterification was continued for about 4.5 hours until the acid value was reduced to 1.0 or lower, and then the reaction mixture was cooled. An amount of 50 g of the mixture was weighed out and dissolved in 150 mL of hexane. To this, 200 mL of 5 v/v% aqueous methanol was added and solvent extraction was performed. The solvent of the obtained aqueous methanol phase was distilled away using an evaporator, and thus 30 g of a defoaming agent for food (Trial Product 8) was obtained.

Production Example 9

Into a 500-mL four-neck flask equipped with a stirrer, a thermometer, a gas blowing pipe, and a water separator, 164.0 g (about 0.99 mol) of the diglycerol obtained in the above Production Example 1 and 136.0 g (about 0.79 mol) of capric acid (trade name: NAA-102; made by NOF Corp.) were placed. To this, 1.5 mL of a 10 w/v% sodium hydroxide aqueous solution was added as a catalyst, and the mixture was kept at 200°C in nitrogen gas flow under ordinary pressure for 1 hour for esterification. Further, the temperature was raised to 230°C, and the esterification was continued for about 2 hours until the acid value was reduced to 1.0 or lower. The obtained reaction mixture was cooled, and thus about 270 g of a defoaming agent for food (Trial Product 9) was obtained.

Production Example 10

Into a 500-mL four-neck flask equipped with a stirrer, a thermometer, a gas blowing pipe, and a water separator, 112.9 g (about 0.68 mol) of the diglycerol obtained in the above Production Example 1 and 187.1 g (about 1.09 mol) of capric acid (trade name: NAA-102; made by NOF Corp.) were placed. To this, 1.5 mL of a 10 w/v% sodium hydroxide aqueous solution was added as a catalyst, and the mixture was kept at 200°C in nitrogen gas flow under ordinary pressure for 1 hour for esterification. Further, the temperature was raised to 230°C, and the esterification was continued for about 2 hours until the acid value was reduced to 1.0 or lower. The obtained reaction mixture was cooled, and thus about 270 g of a defoaming agent for food (Trial Product 10) was obtained.

Production Example 11

Into a 500-mL four-neck flask equipped with a stirrer, a thermometer, a gas blowing pipe, and a water separator, 118.7 g (about 0.72 mol) of the diglycerol obtained in the above Production Example 1, 82.9 g (about 0.57 mol) of caprylic acid (trade name: NAA-82; made by NOF Corp.), and 98.4 g (about 0.57 mol) of capric acid (trade name: NAA-102; made by NOF Corp.) were placed. To this, 1.5 mL of a 10 w/v% sodium hydroxide aqueous solution was added as a catalyst, and the mixture was kept at 200°C in nitrogen gas flow under ordinary pressure for 1 hour for esterification. Further, the temperature was raised to 230°C, and the esterification was continued for about 2 hours until the acid value was reduced to 1.0 or lower. The obtained reaction mixture was cooled, and thus about 270 g of a defoaming agent for food (Trial Product 11) was obtained.

Production Example 12

To a 500-mL glass beaker, 15.0 g of ion-exchange water and 220.5 g of D-sorbitol syrup (trade name: Sorbitol F; made by B Food Science Co., Ltd., sugar content: 70%) were added, and then 4.5 g of polyglycerol lauric acid ester (trade name: Poem J-0021; made by Riken Vitamin Co., Ltd., HLB: 16.0), which is a hydrophilic emulsifier, was added. The mixture was heated to about 70°C in a hot-water bath while stirred at 3000 rpm with the use of a T.K. homo mixer (Model: MARK II; made by PRIMIX Corp.), and the stirring was continued for another 5 minutes to obtain a uniform dispersion, which was used as an aqueous phase. Subsequently, 60 g of the defoaming agent for food obtained in Production Example 4 (Trial Product 4) was heated to about 70°C for use as an oil phase. While the aqueous phase was stirred at 3000 rpm with the use of the T.K. homo mixer, the oil phase was added thereto. Subsequently, the mixture was further stirred at 10000 rpm at 70°C for 10 minutes, and thus 300 g of a defoaming agent for food in the form of an oil-in-water emulsion formulation (Trial Product 12) was obtained.

Production Example 13

Into a 500-mL four-neck flask equipped with a stirrer, a thermometer, a gas blowing pipe, and a water separator, 91.7 g (about 0.55 mol) of the diglycerol obtained in the above Production Example 1 and 208.3 g (about 1.45 mol) of caprylic acid (trade name: NAA-82; made by NOF Corp.) were placed. To this, 1.5 mL of a 10 w/v% sodium hydroxide aqueous solution was added as a catalyst, and the mixture was kept at 200°C in nitrogen gas flow under ordinary pressure for 1 hour for esterification. Further, the temperature was raised to 230°C, and the esterification was continued for about 3 hours until the acid value was reduced to 1.0 or lower. The obtained reaction mixture was cooled, and thus about 260 g of a defoaming agent for food (Trial Product 13) was obtained.

Production Example 14

In the same manner as in Production Example 8 except that the solvent extraction and the subsequent solvent removal by distillation were not performed, about 260 g of a defoaming agents for food (Trial Product 14) was obtained.

Production Example 15

An amount of 50 g of Trial Product 1 obtained in Production Example 1 was weighed out and dissolved in 70 mL of hexane. To this, 60 mL of 30 v/v% aqueous methanol was added and solvent extraction was performed. The solvent of the obtained hexane phase was distilled away using an evaporator and thus about 33 g of an intermediate product was obtained. The intermediate product was dissolved in 50 mL of hexane. To this, 100 mL of 50 v/v% aqueous methanol was added and solvent extraction was performed. The solvent of the obtained aqueous methanol phase was distilled away using an evaporator, and thus about 10 g of a defoaming agent for food (Trial Product 15) was obtained.

Production Example 16

An amount of 50 g of Trial Product 4 obtained in Production Example 4 was weighed out and dissolved in 250 mL of hexane. To this, 200 mL of 10 v/v% aqueous methanol was added and solvent extraction was performed. The solvent of the obtained hexane phase was distilled away using an evaporator and thus about 20 g of a defoaming agent for food (Trial Product 16) was obtained.

Production Example 17

An amount of 50 g of Trial Product 5 obtained in Production Example 5 was weighed out and dissolved in 150 mL of hexane. To this, 100 mL of 10 v/v% aqueous methanol was added and solvent extraction was performed. The solvent of the obtained hexane phase was distilled away using an evaporator and thus about 40 g of a defoaming agent for food (Trial Product 17) was obtained.

Production Example 18

Into a 500-mL four-neck flask equipped with a stirrer, a thermometer, a gas blowing pipe, and a water separator, 81.2 g (about 0.49 mol) of the diglycerol obtained in the above Production Example 1 and 218.8 g (about 1.27 mol) of capric acid (trade name: NAA-102; made by NOF Corp.) were placed. To this, 1.5 mL of a 10 w/v% sodium hydroxide aqueous solution was added as a catalyst, and the mixture was kept at 200°C in nitrogen gas flow under ordinary pressure for 1 hour for esterification. Further, the temperature was raised to 230°C, and the esterification was continued for about 3 hours until the acid value was reduced to 1.0 or lower. The obtained reaction mixture was cooled and thus about 270 g of a defoaming agent for food (Trial Product 18) was obtained.

Production Example 19

Into a 500-mL four-neck flask equipped with a stirrer, a thermometer, a gas blowing pipe, and a water separator, 102.5 g (about 0.62 mol) of the diglycerol obtained in the above Production Example 1 and 197.5 g (about 0.99 mol) of lauric acid (trade name: NAA-122; made by NOF Corp.) were placed. To this, 1.5 mL of a 10 w/v% sodium hydroxide aqueous solution was added as a catalyst, and the mixture was kept at 200°C in nitrogen gas flow under ordinary pressure for 1 hour for esterification. Further, the temperature was raised to 230°C, and the esterification was continued for about 2 hours until the acid value was reduced to 1.0 or lower. The obtained reaction mixture was cooled and thus about 270 g of a defoaming agent for food (Trial Product 19) was obtained.

Production Example 20

Into a 500-mL four-neck flask equipped with a stirrer, a thermometer, a gas blowing pipe, and a water separator, 100.0 g (about 0.60 mol) of the diglycerol obtained in the above Production Example 1 and 200.0 g (about 0.73 mol) of stearic acid (trade name: Stearic Acid 65; made by Miyoshi Oil & Fat Co., Ltd.) were placed. The mixture was kept at 230°C in nitrogen gas flow under ordinary pressure for about 3 hours for esterification until the acid value was reduced to 2.0 or lower. The obtained reaction mixture was cooled, and thus about 260 g of a defoaming agent for food (Trial Product 20) was obtained.

Production Example 21

Into a 500-mL four-neck flask equipped with a stirrer, a thermometer, a gas blowing pipe, and a water separator, 98.7 g (about 0.59 mol) of the diglycerol obtained in the above Production Example 1 and 201.3 g (about 0.72 mol) of oleic acid (trade name: Lunac 0-V; made by Kao Corp.) were placed. The mixture was kept at 230°C in nitrogen gas flow under ordinary pressure for about 3 hours for esterification until the acid value was reduced to 2.0 or lower. The obtained reaction mixture was cooled, and thus about 260 g of a defoaming agent for food (Trial Product 21) was obtained.

Production Example 22

Into a 500-mL four-neck flask equipped with a stirrer, a thermometer, a gas blowing pipe, and a water separator, 80.7 g (about 0.49 mol) of the diglycerol obtained in the above Production Example 1 and 219.3 g (about 0.78 mol) of oleic acid (trade name: Lunac 0-V; made by Kao Corp.) were placed. The mixture was kept at 230°C in nitrogen gas flow under ordinary pressure for about 3 hours for esterification until the acid value was reduced to 2.0 or lower. The obtained reaction mixture was cooled, and thus about 270 g of a defoaming agent for food (Trial Product 22) was obtained.

Composition Analysis

The defoaming agents obtained in the above Production Examples 1 to 22 (Trial Products 1 to 22 other than Trial Product 12) were analyzed for the monoester content (A%), the diester content (B%), the triester content (C%), and the tetraester content (D%) by high-performance liquid chromatography (HPLC) . Also, a commercial diglycerol capric acid ester mixture (Commercial Product 1 in Table 1) was analyzed in the same manner by HPLC. The results are shown in Table 1. Among these, Trial Products 1 to 11 are examples of the present invention, and Trial Products 13 to 22 and Commercial Product 1 are comparative examples.

Table 1

|  | Trial Product |  | Content (%) | | | | (A+B+C) / (A+B+C+D) | (B+C) / A |
|---|---|---|---|---|---|---|---|---|
|  |  |  | A | B | C | D |  |  |
| Example | 1 | Diglycerol caprylic acid ester mixture | 41.1 | 20.9 | 4.6 | 0.7 | 0.99 | 0.6 |
|  | 2 | Diglycerol caprylic acid ester mixture | 39.2 | 30.3 | 10.0 | 1.5 | 0.98 | 1.0 |
|  | 3 | Diglycerol caprylic acid ester mixture | 29.6 | 37.9 | 20.0 | 3.9 | 0.96 | 2.0 |
|  | 4 | Diglycerol caprylic acid ester mixture | 19.5 | 38.0 | 31.0 | 8.2 | 0.92 | 3.5 |
|  | 5 | Diglycerol caprylic acid ester mixture | 11.3 | 32.5 | 39.2 | 15.3 | 0.84 | 6.3 |
|  | 6 | Diglycerol caprylic acid ester mixture | 32.2 | 47.7 | 13.1 | 0.8 | 0.99 | 1.9 |

# EP 2 689 671 B1

(continued)

| | Trial Product | | Content (%) | | | | (A+B+C) / (A+B+C+D) | (B+C) / A |
|---|---|---|---|---|---|---|---|---|
| | | | A | B | C | D | | |
| | 7 | Diglycerol caprylic acid ester mixture | 22.7 | 52.7 | 19.7 | 1.8 | 0.98 | 3.2 |
| | 8 | Diglycerol caprylic acid ester mixture | 8.4 | 33.5 | 45.1 | 11.4 | 0.88 | 9.4 |
| | 9 | Diglycerol capric acid ester mixture | 41.6 | 23.1 | 5.5 | 0.8 | 0.99 | 0.7 |
| | 10 | Diglycerol capric acid ester mixture | 27.1 | 38.8 | 23.5 | 4.2 | 0.96 | 2.3 |
| | 11 | Diglycerol caprylic acid capric acid ester mixture | 28.9 | 41.7 | 17.4 | 4.4 | 0.95 | 2.0 |
| Comparative example | 13 | Diglycerol caprylic acid ester mixture | 7.9 | 27.7 | 42.5 | 20.4 | 0.79 | 8.9 |
| | 14 | Diglycerol caprylic acid ester mixture | 5.6 | 23.2 | 43.0 | 27.3 | 0.72 | 11.8 |
| | 15 | Diglycerol caprylic acid ester mixture | 67.7 | 14.0 | 1.2 | 0.0 | 1.00 | 0.2 |
| | 16 | Diglycerol caprylic acid ester mixture | 2.9 | 23.2 | 55.3 | 18.1 | 0.82 | 27.1 |
| | 17 | Diglycerol caprylic acid ester mixture | 1.8 | 16.5 | 48.5 | 32.6 | 0.67 | 36.1 |
| | 18 | Diglycerol capric acid ester mixture | 6.8 | 26.2 | 42.9 | 22.5 | 0.77 | 10.2 |
| | 19 | Diglycerol lauric acid ester mixture | 26.7 | 39.7 | 22.9 | 4.4 | 0.95 | 2.3 |
| | 20 | Diglycerol stearic acid ester mixture | 35.8 | 36.9 | 14.3 | 2.2 | 0.98 | 1.4 |
| | 21 | Diglycerol oleic acid ester mixture | 32.8 | 35.2 | 18.3 | 5.8 | 0.94 | 1.6 |
| | 22 | Diglycerol oleic acid ester mixture | 23.2 | 41.3 | 25.4 | 5.3 | 0.94 | 2.9 |
| | Commercial Product 1 | Diglycerol capric acid ester mixture | 77.6 | 12.1 | 0.0 | 0.0 | 1.00 | 0.2 |

Commercial Product 1: Sunsoft Q-10D (trade name; made by Taiyo Kagaku Co., Ltd.)

Defoaming Effect Evaluation Test

The defoaming agents obtained in the above Production Examples 1 to 22 (Trial Products 1 to 22) and commercial emulsifiers (Commercial Products 1 to 4 in Table 2) were subjected to defoaming agent evaluation tests by the test methods (1) and (2) shown below. Also, as the control, a commercial silicone resin based defoaming agent (Commercial Product 5 in Table 2) and a sample not containing any defoaming agent or emulsifier were subjected to the same tests. The results are shown in Table 2.

(1) Test Method for Evaluation of Defoaming Effect at 10°C

An aqueous solution obtained by dissolving 171.2 g of sucrose in 800 g of ion-exchange water is placed in a 1000 mL-graduated cylinder, and then diluted with ion-exchange water to 1000 mL to give a 0.5 M aqueous solution of sucrose. In this 0.5 M aqueous solution of sucrose, 32.7 g of sodium caseinate is dissolved to give a 3 w/w% solution of sodium caseinate in 0.5 M aqueous solution of sucrose for use as a test solution.

The above test solution in an amount of 30 g is weighed out and poured into a test tube 30 mm in inside diameter and 200 mm in height. To this, 0.003 g (100 ppm) of a sample (0.015 g (500 ppm) only in the case of Trial Product 12) is added and the test tube was hermetically sealed with a silicone plug. The test tube was shaken with the use of a test tube mixer (Model: Se-04; made by TAITEC Corp.) for 15 seconds to disperse the sample in the test solution. Then, the test tube is held by hand and vigorously shaken up and down 50 times in 15 seconds for foam formation. After a lapse of 1 minute from the end of the shaking, the foam height (height from the interface between the foam and the test solution to the top of the foam) is measured. The temperature of the test solution immediately after the preparation is adjusted so that the temperature would be about 10°C at the time of the foam height measurement (for example, about 7 to 8°C).

(2) Test Method for Evaluation of Defoaming Effect at 40°C

The foam height measurement was performed in the same manner as in the above test method (1) except that the temperature of the test solution immediately after the preparation is adjusted so that the temperature would be about 40°C at the time of the foam height measurement (for example, about 43 to 44°C).

Table 2

| | Defoaming agent or Emulsifier | | Foam height (mm) | |
| --- | --- | --- | --- | --- |
| | | | 10°C | 40°C |
| Example | Trial Product 1 | Diglycerol caprylic acid ester mixture | 26.5 | 25.5 |
| | Trial Product 2 | Diglycerol caprylic acid ester mixture | 20.5 | 19.5 |
| | Trial Product 3 | Diglycerol caprylic acid ester mixture | 18.5 | 20.5 |
| | Trial Product 4 | Diglycerol caprylic acid ester mixture | 23.5 | 17.0 |
| | Trial Product 5 | Diglycerol caprylic acid ester mixture | 45.5 | 15.5 |
| | Trial Product 6 | Diglycerol caprylic acid ester mixture | 15.5 | 22.0 |
| | Trial Product 7 | Diglycerol caprylic acid ester mixture | 20.0 | 21.5 |
| | Trial Product 8 | Diglycerol caprylic acid ester mixture | 46.5 | 20.5 |
| | Trial Product 9 | Diglycerol capric acid ester mixture | 31.5 | 19.5 |
| | Trial Product 10 | Diglycerol capric acid ester mixture | 23.0 | 17.5 |
| | Trial Product 11 | Diglycerol caprylic acid capric acid ester mixture | 16.5 | 21.5 |
| | Trial Product 12 | Oil-in-water emulsion formulation of Trial Product 4 | 20.5 | 13.0 |
| Comparative example | Trial Product 13 | Diglycerol caprylic acid ester mixture | 61.0 | 23.0 |
| | Trial Product 14 | Diglycerol caprylic acid ester mixture | 67.5 | 22.0 |
| | Trial Product 15 | Diglycerol caprylic acid ester mixture | 64.0 | 59.0 |
| | Trial Product 16 | Diglycerol caprylic acid ester mixture | 72.0 | 26.5 |
| | Trial Product 17 | Diglycerol caprylic acid ester mixture | 73.5 | 39.5 |
| | Trial Product 18 | Diglycerol capric acid ester mixture | 63.5 | 22.5 |
| | Trial Product 19 | Diglycerol lauric acid ester mixture | 85.5 | 15.5 |
| | Trial Product 20 | Diglycerol stearic acid ester mixture | 82.0 | 72.5 |
| | Trial Product 21 | Diglycerol oleic acid ester mixture | 58.5 | 23.5 |
| | Trial Product 22 | Diglycerol oleic acid ester mixture | 48.0 | 37.5 |

(continued)

| | Defoaming agent or Emulsifier | | Foam height (mm) | |
|---|---|---|---|---|
| | | | 10°C | 40°C |
| | Commercial Product 1[1] | Diglycerol capric acid ester mixture | 86.0 | 38.5 |
| | Commercial Product 2[2] | Glycerol caprylic acid ester mixture | 54.0 | 54.0 |
| | Commercial Product 3[3] | Glycerol capric acid ester mixture | 83.0 | 42.5 |
| | Commercial Product 4[4] | Glycerol caprylic acid ester mixture | 67.5 | 26.0 |
| Control | Commercial Product 5[5] | Silicone resin based defoaming agent | 69.5 | 21.5 |
| | Not used | - | 88.0 | 83.0 |

1) Sunsoft Q-10D (trade name; made by Taiyo Kagaku Co., Ltd.)
2) Poem M-100; (trade name; made by Riken Vitamin Co., Ltd.)
3) Poem M-200; (trade name; made by Riken Vitamin Co., Ltd.)
4) Sunsoft GDC-S (trade name; made by Taiyo Kagaku Co., Ltd.)
5) KM-72FS (trade name; made by Shin-Etsu Chemical Co., Ltd.)

Table 2 clearly shows that each of the defoaming agents of the present invention for food (Trial Products 1 to 12) exerted a defoaming effect equal to or higher than that of the silicone resin based defoaming agent and that the effect was in particular significant in the test at 10°C.

## Claims

1. A defoaming agent which is an esterification product of (i) diglycerol and (ii) caprylic acid and/or capric acid and is **characterized by** satisfying the following formulae (1) and (2) :

$$\text{Formula (1): } 0.8 \leq (A+B+C)/(A+B+C+D)$$

$$\text{Formula (2): } 0.5 \leq (B+C)/A \leq 10$$

when the monoester content in the product is represented by A%, the diester content in the product is represented by B%, the triester content in the product is represented by C%, and the tetraester content in the product is represented by D%.

## Patentansprüche

1. Entschäumungsmittel, welches ein Veresterungsprodukt von (i) Diglycerol und (ii) Caprylsäure und/oder Caprinsäure ist und **dadurch gekennzeichnet ist, dass** es den folgenden Formeln (1) und (2) genügt:

$$\text{Formel (1): } 0{,}8 \leq (A+B+C)/(A+B+C+D)$$

$$\text{Formel (2): } 0{,}5 \leq (B+C)/A \leq 10,$$

wenn der Monoestergehalt in dem Produkt durch A% dargestellt wird, der Diestergehalt in dem Produkt durch B% dargestellt wird, der Triestergehalt in dem Produkt durch C% dargestellt wird und der Tetraestergehalt in dem Produkt durch D% dargestellt wird.

**Revendications**

1. Agent antimousse qui est un produit d'estérification (i) du diglycérol et (ii) de l'acide caprylique et/ou de l'acide caprique et est **caractérisé en ce qu'**il satisfait aux formules (1) et (2) suivantes :

$$\text{Formule (1) : } 0,8 \leq (A + B + C+)/(A + B + C + D)$$

$$\text{Formule (2) : } 0,5 \leq (B + C)/A \leq 10$$

où la teneur en monoester dans le produit est représentée par A %, la teneur en diester dans le produit est représentée par B %, la teneur en triester dans le produit est représentée par C %, et la teneur en tétraester dans le produit est représentée par D %.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S61247345 A
- JP 56164750 A
- JP 6245718 A
- WO 2003096825 A

- JP 2007203214 A
- JP 2008119588 A
- JP 2010193740 A